Europäisches Patentamt

European Patent Office

Office européen des brevets

(11) Publication number: **0 038 715 B1**

# EUROPEAN PATENT SPECIFICATION

(45) Date of publication of patent specification: **14.10.92**   (51) Int. Cl.⁵: **H01C 7/02**, H02H 9/02

(21) Application number: **81301766.2**

(22) Date of filing: **21.04.81**

(54) **Circuit protection devices.**

(30) Priority: **21.04.80 US 141987**

(43) Date of publication of application:
**28.10.81 Bulletin 81/43**

(45) Publication of the grant of the patent:
**14.10.92 Bulletin 92/42**

(84) Designated Contracting States:
**AT BE CH DE FR IT LI NL SE**

(56) References cited:
**GB-A- 259 272         GB-A- 1 178 661**
**GB-A- 2 036 754       US-A- 2 663 782**
**US-A- 3 586 642       US-A- 3 760 495**
**US-A- 3 858 144**

(73) Proprietor: **RAYCHEM CORPORATION (a Delaware corporation)**
**300 Constitution Drive**
**Menlo Park, California 94025(US)**

(72) Inventor: **Middleman, Lee Mark**
**119 Corte Madera Road**
**Portola Valley California 94025(US)**
Inventor: **Doljack, Frank**
**3181 Camdon Court**
**Pleasanton California 94566(US)**

(74) Representative: **Benson, John Everett et al**
**Raychem Limited Intellectual Property Law Department Faraday Road Dorcan Swindon, Wiltshire SN3 5HH(GB)**

**Description**

Conductive polymer PTC compositions, and devices, including circuit protection devices containing them, are known -see for example U.S. Patent Nos. 2,978,665, 3,243,753, 3,351,882, 4,017,715 and 4,177,376 for details of recent developments, reference may be made for example to German OLS Nos. 2,948,350, 2,948,281, 2,949,173 and 3,002,721; to the European applications EP-A-0020081 and EP-0022611 (U.S. Serial Nos. 41,071), EP-A-0026571 (USSN 67,207) and EP-A-0028142 (USSN 88,344); and to the european Applications filed contemporaneously herewith namely EP-A-0038718 (U.S. Serial Nos. 141,984 and 141,988), EP-A-0038713 (USSN 141,989), EP-A-0038714 (USSN 141,991), EP-A-0038716 (USSN 142,053), EP-A-0038717 (USSN 142,054).

For example EP-A-0038714 and EP-A-0038718 disclose a circuit protection device having a cross-linked polymeric component; EP-A-0038714 discloses PTC compositions containing particles of metal as a conductive filler and also a polymeric component having a crystallinity of at least 10%.

In further investigations of the use of previously proposed circuit protection devices comprising PTC conductive polymer elements, we recognized a problem which had not previously been considered, namely that when such a device was used to protect a circuit from a very rapid increase in current (arising, for example, from a short or the intrusion of a new power source), there were many combinations of peak current through the device and peak voltage drop across the device which would substantially impair the ability of the device to function effectively a number of times. By contrast, when the tripping of the device (ie. its conversion to a high resistance high temperature state) took place slowly, eg. as a result of a slow increase in the current or an increase in the temperature of the medium surrounding the device, no such problems were apparent. We found, for example, that previously proposed devices, such as those specifically described in German OLS Nos. 2,948,281 and 3,002,721, were capable of providing effective protection on repeated tripping either (a) at peak currents of less than 1 amp, even at voltages as high as 240 volts (and, we believe, also doing so at yet higher voltages), or (b) at voltages of less than 50 volts, even at peak currents of 200 amps (and, we believe, also doing so at yet higher currents). On the other hand, we also found that such devices would provide effective protection for at most 4 trips and often fewer, when tripped under conditions of greater electrical stress, e.g. at a voltage of about 200 volts or more and a peak current of 10 amps or more. In some cases the devices ceased to provide effective protection because their resistance had increased to a level where they tripped under the normal operating conditions of the circuit, while in others there was catastrophic failure on tripping, accompanied by explosion or flaming.

The present invention relates to circuit protection devices which have improved performance when subjected to repeated tripping caused by a rapid increase in current, and to circuits containing protection devices.

Thus the invention provides a PTC conductive polymer device:

(1) which is a circuit protection device:

(2) which comprises:

a PTC element composed of a PTC composition which

    (A) has a switching temperature $T_s$ and

    (B) comprises:

        (i) a crystalline polymer component

        (ii) dispersed in said polymer component,

            (a) an arc-controlling additive and

            (b) a particulate filler component which comprises a conductive filler which is one or more of carbon black and graphite and is present in a quantity such that the resistivity of the composition at 23°C is less than 10 ohm-cm; and at least two electrodes which can be connected to a source of electrical power and which, when so connected, cause current to flow through said PTC element;

(3) which has a resistance at 23°C of $^{23}_0R_d$ and

(4) which is characterized in that:

when the device forms part of a first test circuit which is subjected to a device test routine, or when the device forms part of a second test circuit which is subject to a device test routine then in each of the test cycles of the test routine, the result of closing the switch is that

    (a) initially the device generates heat by $I^2R$ heating at a rate which exceeds the rate at which heat can be lost from the device, causing the resistance of the device to rise rapidly and the circuit current to fall, and

    (b) thereafter the device reaches a high temperature stable operating condition in which the rate at which the device generates heat by $I^2R$ heating is equal to the rate at which heat is lost from the device, and

after said test routine has been completed, the device has a resistance at 23°C which is less than 3 x $^{23}_oR_d$ ohms, preferably less than 2 x $^{23}_oR_d$ ohms;

the first test circuit being a circuit which consists essentially of the PTC conductive polymer protection device, surrounded by still air at 0°C, 23°C or 70°C, a switch, a fixed resistor of resistance of $R_1$ ohms and a 120 volt DC power source, where $R_1$ is such that the computed current density, defined as the largest of

(i) the current divided by the effective surface area (ESA) of a first electrode,

(ii) the current divided by the effective surface area of a second electrode, and

(iii) the current divided by the minimum cross-sectional area of the PTC element at right angles to the direction of the current flow,

in the PTC element of the device in the first test cycle of the device test routine reaches a maximum of 155 amps/cm$^2$;

wherein the ESA of an electrode is the cross-sectional area of the electrode when viewed in the direction of current flow (ignoring any apertures in the electrode which are sufficiently small for the electrode to provide a substantially equipotential surface over its total area);

the second test circuit being a circuit which consists essentially of the PTC conductive polymer protection device, surrounded by still air at 0°C, 23°C, or 70°C, a switch, a fixed resistor of resistance $R_2$ ohms, and a 240 volt DC power source, where $R_2$ is such that the peak current through the device in the first test cycle of the device test routine is the higher of 1 amp and 2 x $i^{air}_{crit}$ where $i^{air}_{crit}$ is the maximum steady state current which, when it flows through the device, causes the device to generate heat by $I^2R$ heating at a rate equal to the rate at which heat can be lost from the device; and

a device test routine being a procedure in which a first or second test circuit is subjected to N successive test cycles, where N is 5, in each of which test cycles the switch is closed either for 5 seconds (for the first test circuit) or for 30 seconds (for the second test circuit), the switch is then opened, and the device is allowed to cool to 23°C before the next test cycle is carried out.

The invention also provides an electrical circuit:

(1) which comprises

a power source having a voltage of V volts,

a PTC conductive polymer protection device which comprises a PTC element composed of a PTC composition which comprises a crystalline polymer component and, dispersed in said polymer component, an arc-controlling additive, and a particulate filler component which comprises a conductive filler which is one or more of carbon black and graphite and is present in a quantity such that the resistivity of the composition at 23°C is less than 10 ohm cm, and

a damageable circuit component;

(2) which has a first normal operating condition in which

(A) a current $i_n$ flows through the device,

(B) the device is at a temperature $T_{dn}$ and has a resistance $R_{dn}$,

(C) the device is in contact with a medium which is at a temperature $T_n$,

(D) a current less than $i_{damage}$ flows through the damageable circuit component, and

(E) there is a stable equilibrium between the rate at which the device generates heat by $I^2R$ heating and the rate at which heat is lost from the device; and

(3) which is characterized in that:

if a first fault circuit containing the device is created and is subjected to a circuit test routine and/or if a second fault circuit containing the device is created and is subjected to a circuit test routine

then in each of the test cycles of the test routine the result of closing the switch is that

(a) initially the device generates heat by $I^2R$ heating at a rate which exceeds the rate at which heat can be lost from the device, thus causing the resistance of the device to rise rapidly and the circuit current to fall, and

(b) thereafter the current through the damageable circuit component reaches a stable value which is less than $i_{damage}$, the potential drop over the device reaches a stable value which is the higher of 120 volts and 1.5 xV, and the device reaches a high temperature stable operating condition in which the rate at which the device generates heat by $I^2R$ heating is equal to the rate at which heat is lost from the device; and

after said test cycles have been completed the device has a resistance at $T_{dn}$ which is less than 3 x $R_{dn}$, preferably less than 2 x $R_{dn}$;

the first fault circuit being a circuit which is created by introducing new electrical elements comprising a

EP 0 038 715 B1

new power source and a switch into said electrical circuit and in which in the first test cycle of the circuit test routine

(a) there is an initial fault current flowing through the damageable circuit component which exceeds $i_{damage}$;

(b) there is an initial fault current flowing through the device which results in a computed current density,

defined as the largest of

(i) the current divided by the effective surface area (ESA) of the first electrode,

(ii) the current divided by the effective surface area of a second electrode, and

(iii) the current divided by the minimum cross-sectional area of the PTC element at right angles to the direction of current flow,

in the PTC element of the device which reaches a maximum of 155 amps/cm$^2$,

wherein the ESA of an electrode is the cross-sectional area of the electrode when viewed in the direction of current flow (ignoring any apertures in the electrode which are sufficiently small for the electrode to provide a substantially equipotential surface over its total area);

(c) the device and the damageable circuit component are in series; and

(d) the voltage is such that the peak potential drop over the device is the higher of 120 volts and 1.5 xV;

a circuit test routine being a procedure in which a first or second fault circuit is subjected to N successive cycles, where N is 5, in each of which test cycles the switch is closed either for 5 seconds (for the first fault circuit) or for 30 seconds (for the second fault circuit), the switch is then opened and the device allowed to cool to $T_{dn}$ before the next test cycle is carried out; and

the second fault circuit being a circuit which is created by introducing new electrical elements comprising a new power source and a switch into said electrical circuit and in which, in the first test cycle of the circuit test routine

(a) there is an initial fault current flowing through the damageable circuit component which exceeds $i_{damage}$,

(b) there is an initial fault current flowing through the device which is the higher of 1 amp and 3 x $i_{crit}$ where $i_{crit}$ is the maximum current which, when it flows through the device in the circuit, causes the device to generate heat by I$^2$R heating at a rate equal to the rate at which heat can be lost from the device,

(c) the device and the damageable circuit component are in series, and

(d) the voltage is such that the peak potential drop over the device is 240 volts;

wherein a damageable circuit component is a component which is damaged if the current flowing through it exceeds a value $i_{damage}$ amps for a time t seconds where t is 30.

The invention further provides an electrical circuit:

(1) which comprises

a PTC conductive polymer protection device,

which comprises a PTC element composed of a PTC composition which comprises a crystalline polymer component and, dispersed in said polymer component an arc-controlling additive, and a particulate filler component which comprises a conductive filler which is one or more of carbon black and graphite and is present in a quantity such that the resistivity of the composition at 23°C is less than 10 ohm cm, and

a power source having a voltage of $V_1$ volts which is at least 120 volts (eg 200 to 250 volts, usually an AC source), and

other circuit elements which are connected in series with the device and which have an impedance of $R_L$ ohm which is preferably substantially constant, ie does not vary by more than ± 25% in the temperature range of operation of the circuit.

(2) which has a second normal operating condition in which

(A) a current in flows through the device

(B) the device is at a temperature $T_{dn}$ and has a resistance $R_{dn}$ which is less than 0.5 x $R_L$ ohm (preferably less than 0.1 x $R_L$ ohm, especially less than 0.04 x $R_L$ ohm) and less than $V_1$ ohms (preferably 0.03 x $V_1$ to 0.3 x $V_1$ ohm, especially 0.05 x $V_1$ to 0.2 x $V_1$ ohm),

(C) the device is in contact with a medium which is at a temperature $T_n$, and

(D) there is a stable equilibrium between the rate at which the device generates heat by I$^2$R heating and the rate at which heat is lost from the device;

(3) which has a positive response to current tripping; and

(4) which is characterized in that:

4

if the device, after having been removed from the circuit, is incorporated into a modified first test circuit which is then subjected to a modified device test routine and/or if it is incorporated into a modified second test circuit which is then subjected to a modified device test routine

then the device, after the modified device test routine has been carried out,

(i) has a resistance at $T_n$ which is less than $3 \times R_{dn}$, less than $0.5 \times R_L$, and less than $V_1$ ohms, and

(ii) has an electrical power/temperature relationship such that, if the device is replaced in the electrical circuit, the electrical circuit has a second normal operating condition and has a positive response to current tripping;

the modified first test circuit being a circuit which consists essentially of the protection device from the fixed voltage circuit, a switch, a fixed resistor of resistance $R_1$ ohms and a power source having the same voltage $V_1$ as the power source in the fixed voltage circuit, the device being in contact with the same medium at the same temperature $T_n$ as in the fixed voltage circuit and $R_1$ being such that the computed current density,

defined as the largest of

(i) the current divided by the effective surface area (ESA) of a first electrode,

(ii) the current divided by the effective surface area of a second electrode, and

(iii) the current divided by the minimum cross-sectional area of the PTC element at right angles to the direction of current flow,

in the PTC element of the device in the first test cycle of the modified test routine reaches a maximum of 155 amps/cm$^2$;

the ESA of an electrode is the cross-sectional area of the electrode when viewed in the direction of current flow ignoring any apertures in the electrode which are sufficiently small for the electrode to provide a substantially equipotential surface over its total area);

a modified device test routine being a procedure in which a modified first test circuit or a modified second test circuit is subjected to N successive cycles where N is 5, in each of which test cycles the switch is closed either for 5 seconds (for the first modified test circuit) or for 30 seconds (for the second modified test circuit), whereby the device initially generates heat by $I^2R$ heating at a rate which exceeds the rate at which heat can be lost from the device, thus causing the resistance of the device to rise rapidly and the circuit current to fall, and thereafter the device reaches a high temperature stable operating condition in which the rate at which the device generates heat is equal to the rate at which heat is lost from the device, the switch is opened and the device is allowed to cool to Tn before the next test cycle is carried out;

a modified second test circuit being a circuit which consists essentially of a protection device from a fixed voltage circuit in which the power source has a voltage $V_2$ which is at least 240 volts, a switch, a fixed resistor of resistance $R_2$ ohms and a power source having the same voltage $V_2$ as the power source in the fixed voltage circuit, the device being in contact with the same medium at the same temperature $T_n$ in the fixed voltage circuit and $R_2$ being such that in the first test cycle of the modified device test routine, the peak current through the device is the higher of 1 amp and $3 \times i_{crit}$ where $i_{crit}$ is the maximum current which, when it flows through the device in the circuit, causes the device to generate heat by $I^2R$ heating at a rate equal to the rate at which heat can be lost from the device;

a positive response to current tripping being defined as that which a fixed voltage circuit has

(a) if elements of the circuit are changed so that current flowing through said device increases slowly while maintaining ambient temperature substantially constant, then the temperature of the device increases slowly until the circuit reaches a critical operating condition in which (i) the equilibrium between the rate at which the device generates heat by $I^2R$ heating and the rate at which heat is lost from the device is unstable, (ii) the device is at a temperature $T_d$ trip and has a resistance $R_d$ trip, (iii) the rate at which the resistance of the device changes with temperature

$$\frac{dR_d \text{ trip}}{dT_d \text{ trip}}$$

is positive, and

(iv) the current has a value $i_{crit}$; and

(b) if elements of the circuit are further changed so that the current flowing through the device increases to $2 \times i_{crit}$, while maintaining ambient temperature substantially constant, then the rate at which the device generates heat by $I^2R$ heating exceeds the rate at which heat can be lost from the device and thus causes the temperature and the resistance of the device to rise rapidly and the circuit current to fall, and thereafter the circuit reaches a high temperature stable operating condition in which (i) the rate at which the device generates heat by $I^2R$ heating is equal to the rate at which heat is lost from the device; and (ii) the device is at a temperature $T_d$ latch which is such that the ratio of the power in the circuit in the normal operating condition to the power in the circuit in the high temperature stable operating condition, the switching ratio, is at least 8, generally at least 10, preferably substantially higher, eg at least 20, preferably at least 40; the device will generally be "latched" (ie it will remain in a high resistance, high temperature state even if the fault condition is removed).

Preferably the device behaves in the defined way in both the modified first test circuit and the modified second test circuit.

We prefer that the device of the invention is characterized in that (a) it contains two electrodes each having an electrically-active surface of generally columnar shape, and (b) it has a resistance at 23°C of 1 to 100 ohms and an $i^{air}_{crit}$ of 0.05 to 2 amps. The "electrically active surface" of an electrode is the surface of the electrode through which current flows when current is passed through the device.

Reference was made above to current density. As those skilled in the art will recognize, when the electrode does not have a planar surface at right angles to the direction of current flow (eg when wire electrodes are used, as described below), the current density will vary across the electrode and PTC element in a complex fashion.

The values of (i) and (ii) in the above definitions of computed current density will usually be the same, and the value of (iii) can be smaller, the same, or larger. In some of the procedures defined above, reference is made to the fact that the "computed current density in the PTC element ... reaches a maximum of 155 amp/cm$^2$.

Preferably the device of the invention is characterized in that (a) each of the electrodes has a length, 1, from 0.76 to 2.5 cm and a width, w, from 0.05 to 0.25 cm; (b) the interelectrode distance, t, is constant; and (c) w is less than 0.5t. The term "inter-electrode distance", t, is used herein to denote the shortest geometric distance between two electrodes. The width of an electrode, w, is defined herein as the smallest dimension of the ESA. The length of an electrode, 1, is defined herein as the largest dimension of the ESA. The equivalent diameter of an electrode is defined herein as the diameter of a circle having the same area as the ESA of the electrode.

The minimum cross-sectional area of the PTC element, $A_{min}$, is the area of the smallest cross-section of the PTC element between the electrodes at right angles to the direction of current flow.

The devices of this invention are defined by reference to their behaviour when they are surrounded by still air at 0°C., 23°C or 70°C and form part of one of two defined test circuits. Thus there are six possible test circuits and the devices need have the defined performance in only one of them. However, a particular device will often have the defined performance in more than one of the test circuits, preferably in both the first and the second test circuit when the air is at a particular temperature, especially in both circuits when the air is at 23°C.

The devices in the circuits of the invention will generally be (but are not necessarily) devices of the invention as defined above, especially when the device, in the circuit, is surrounded by air at 0-70°C . A fixed voltage circuit may be an intrusion-prone circuit (ie a circuit which comprises (i) a power source having a voltage of v volts, (2) a PTC conductive polymer protection device and (3) a damageable circuit component) in which the voltage of the power source is more than 120 volts. The definitions of the circuits of the invention reflect fault conditions to which the circuits may be subject, eg the intrusion of a new power source into an intrusion-prone circuit, or a dead short in a fixed voltage circuit, as well as the normal operating condition of the circuit and the thermal environment of the device.

The present invention is particularly concerned with devices providing effective protection against fault conditions in which there is a rapid increase in current to at least 1 amp accompanied by a voltage of at least 150 volts and in which the previously proposed devices will not provide repeated protection; thus previously proposed devices do not have the required performance in the various test routines above. However it is to be understood that the present devices will also provide protection against other fault conditions which will cause the device to trip (eg an excessive increase in the temperature of the medium surrounding the device or a slow increase, to an excessive level, in an excessive level, in the current), in which previously proposed devices will also function effectively.

Except where otherwise specified, the currents, current densities and voltages referred to herein may be (or result in) direct current (DC) or alternating current (AC), the latter term being used to include the case where the circuit or test circuit includes both an AC power supply and a DC power supply. AC values given herein are RMS values. Similarly, the term "resistance" is used herein to include impedance, and the circuits of the invention may include loads which are resistive, capacitive or inductive or any combination thereof. The term "fixed resistor" is used to mean a resistor whose resistance remains substantially constant throughout the test routine.

We have found that in the test routines referred to above, a given device is more likely to meet the test requirements if a DC source is used than it is if an AC source of the same RMS voltage is used. The devices preferably not only meet the test requirements when a DC source is used but also when an AC source is used. In the defined test routines, the number of test cycles, N, is 5. Preferably the devices have the required performance characteristics when N is 10 or more.

A fault condition in which there is a rapid increase in current to at least 1 amp accompanied by a voltage of at least 120 volts can arise in a circuit containing a power source which has a voltage of at least 120 volts and remains the sole power source in the fault condition. Such a fault condition can also arise in a circuit in which the normal power source is above or below 120 volts but which in the fault condition is subject to the intrusion of another power source which has a voltage of at least 120 volts and at least 1.5 times the normal voltage or, if the normal power source is a part of the fault circuit, has in combination with the normal power source a voltage of at least 120 volts and at least 1.5 times the normal voltage. The normal power source of the circuit may be DC or AC. Where the fault condition arises from the intrusion of a new power source, the new power source may be AC or DC and may be a directly connected power source or an induced power source. We have found the invention to be particularly useful in circuits which normally operate at DC voltages of less than 75 volts, e.g. around 50 volts, such as may be provided by batteries, and which are subject to fault conditions arising from the intrusion of AC power sources having a voltage of at least 200 volts, e.g. a mains supply voltage such as 220, 330 or 660 volts. Particularly important examples of such circuits are to be found in telecommunication apparatus, as further described below.

The time taken to convert a device to the high resistance high temperature condition (referred to herein as the "trip time") is dependent on the fault condition and may vary widely, e.g. from as little as a fraction of a second at currents which are many times greater than $i_{crit}$ to as much as 30 minutes at currents which are only just over $i_{crit}$, The devices used in the present invention preferably have a trip time of less than 5 seconds, especially less than 1 second, in each of the test cycles of the device test routine, or of the circuit test routine or of the modified device test routine.

It is to be noted that one of the advantages of the devices used in the present invention is that although they will trip when subjected to an appropriate fault condition which is maintained for a sufficient time to cause tripping, they will neither be tripped nor damaged by a transient fault condition such as that which occurs when the circuit is subject to a lightning strike, which may result for example in a current of the order of 40 amps for a time of 100 microseconds.

As noted above, the previously proposed circuit protection devices often fail to provide repeated protection against sudden increases in current to a level of at least 1 amp and at a voltage of at least 120 volts, and in particular fail to meet the newly recognized test requirements for the devices and circuits of the invention. While the reasons for this failure are not entirely clear, our investigations indicate that in many, if not all, circumstances, it is associated with arc formation within the conductive polymer element adjacent the electrodes. We have found that the devices of the present invention preferably have one or more of the following features which contribute to the ability of the device to provide repeated effective protection against fault conditions which cause failure of previously proposed devices.

(1) The use of a conductive polymer composition containing an additive such as alumina trihydrate which reduces the susceptibility of the PTC composition to form carbonaceous conductive paths as a result of arcing, by reducing the tendency of the composition to arc and/or by ensuring that the decomposition products of arcing are non-conductive. Such compositions are described in detail in the contemporaneously filed application corresponding to U.S. Serial No. 141,989 (MP0715).

(2) The use of device designs which, even if after partial erosion of a PTC element composed of a composition as described in (1), as a result of arcing, still comprise current paths for subsequent tripping which are substantially equivalent electrically.

(3) The use of device designs which reduce the electrical stress adjacent the electrodes, particularly designs which result in the parts of the PTC element which are most rapidly heated during tripping (the so-called "hot zone") being separated from the electrodes, preferably by a distance greater than that which can be bridged by an arc at the voltage and current applied [see the application corresponding to U.S. Serial No. 41,071 (MP0295) and the two contemporaneously filed applications corresponding to U.S Serial Nos. 142,053 and 142,054 (MP0724 and MP0725).]

(4) The use of oxygen barriers around the electrodes and PTC element which are composed of, or are separated from the PTC element by, a material which does not entrap any decomposition products of the PTC material resulting from arcing and which is not itself decomposed or damaged by arcing of the PTC element, e.g. a sealed enclosure which is composed at least in part of a metal and which surrounds the PTC element but is separated therefrom by an inert gas or a vacuum (see German OLS 2,949,173). The interior surface of the oxygen barrier is preferably of insulating material.

(5) The use of PTC compositions which are substantially free from cross-linking.

The electrodes in the devices used in the present invention may have one or more of the following characteristics.

(a) They are composed of a material having a resistivity of less than $10^{-4}$ ohm.cm and have a thickness such that they do not generate significant amount of heat during operation of the device. The electrodes are typically composed of a metal, nickel or nickel-plated electrodes being preferred.

(b) They are in the form of wires or thin strips, preferably of the same dimensions and parallel to the other, and preferably completely embedded in the PTC element. Such electrodes may for example have an ESA of 0.065 to 0.65 cm$^2$, 1 from 0.76 to 2.5 cm and w from 0.13 to 0.25 cm.

(c) They are in the form of planar sheets, generally rectangular or circular, and preferably of the same area and placed parallel and opposite to each other on either side of a flat PTC element. Such electrodes may, for example, have an ESA of 1.93 to 5.2 cm$^2$, and 1 and w from 1.25 to 2.5 cm. Electrodes of this type are described in German OLS 2,948,281 (MP0281).

(d) They are in physical (as well as electrical) contact with the PTC element, or separated therefrom by a layer of another conductive material, e.g. a layer of a relatively constant wattage conductive polymer composition.

The PTC element in the devices used in the present invention is composed of a conductive polymer composition, preferably one in which the conductive filler comprises carbon black or graphite or both, especially one in which carbon black is the sole conductive filler, especially a carbon black having a particle size, D, which is from 20 to 50 millimicrons and a surface area, e, in m$^2$/g such that S/D is not more than 10. The resistivity of the composition at 23°C will generally be less than 100 ohm.cm, especially less than 10 ohm.cm. The composition is preferably substantially free from cross-linking, since we have found that the presence of cross-linking tends to increase the likelihood of formation of carbonaceous conductive paths when arcing takes place. The PTC element will generally be of uniform composition throughout, but may comprise segments of different composition, eg adjacent the electrodes.

The devices used in the present invention will usually have a resistance of less than 100 ohms, preferably less than 50 ohms, and may for example have a resistance of 0.1 to 25 ohms. Often the size of the device, including any oxygen barrier around the PTC element and the electrodes will be an important consideration, and the device design and the resistivity of the PTC should be selected with this in mind (as well as, of course, the resistance and other desired electrical characteristics). Preferred devices have a volume of less than 32.8 cm$^3$, particularly less than 16.4 cm$^3$, especially less than 8.2 cm$^3$; the largest dimension of the device is preferably less than 7.6 cm, particularly less than 5.1 cm, especially less than 2.5 cm.

The invention is illustrated in the accompanying drawings, in which

Figures 1 shows, in a generalized fashion, the combinations of peak current and peak voltage which will impair the ability of previously proposed devices and of devices of the present invention to function effectively a number of times;

Figure 2 shows, in a somewhat more detailed, but still generalized fashion, how variation of the peak current through the device at a particular voltage above 75 volts will affect the ability of a device to function effectively a number of times;

Figure 3 shows the test circuit which is used in determining the ability of a device to function effectively a number of times;

Figures 4 to 7 show devices of the invention; and

Figure 8 and 9 show circuits including devices of the invention.

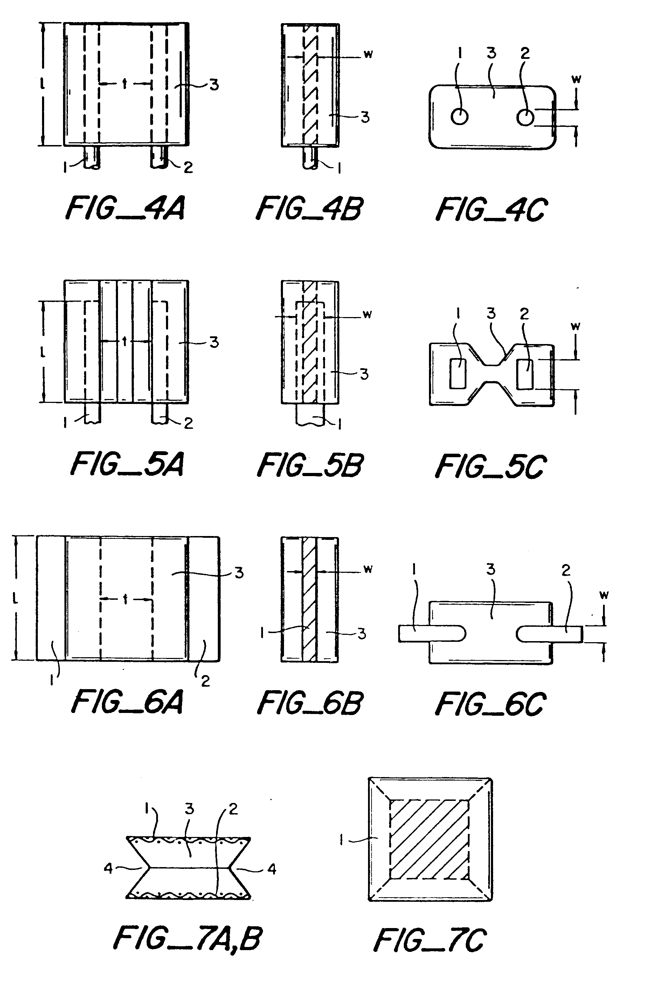

Referring now to the drawings Figures 4A, 4B and 4C, 5A, 5B and 5C and 6A, 6B and 6C, are front, side and plan views of three devices which are examples of one preferred class of devices, in which each of the electrodes is at least partially embedded in the PTC element so that the electrically active surface thereof has a generally columnar shape. In each Figure electrodes 1 and 2 are at least partially embedded in PTC element 3, the interelectrode distance being t, the embedded length of the electrode being 1 and the width of the electrode being w (and the ESA therefore being 1 x w). In each of Figures 4B, 5B and 6B, the area used in calculating the computed current density is shaded, i.e. the ESA of each electrode in Figures 4B and 6B, and the minimum cross-sectional of the PTC element in Figure 5B. In devices of this class, t is preferably constant; and w is preferably less than t, particularly less than 0.75 t, especially less than 0.5 t.

8

The smaller w is in relation to t, and the smaller the minimum width (and minimum cross-sectional area) of the PTC element between the electrodes, the greater the likelihood that the hot plane will form away from the electrodes, as is desirable. On the other hand, the smaller the minimum width of the PTC element, the smaller the amount of erosion which is required before the electrical characteristic of the device are changed. Thus the relationship between the minimum width of the PTC element and the width of the electrodes should be selected having regard to the expected fault conditions and the number of trips required of the device before failure.

In devices of this preferred class, the PTC element preferably has a width, at all points between the electrodes, which is at least 0.2 x w, eg. 0.3 x w to 2 x w, and, depending on the desired characteristics of the device, may be from 0.4 x w to 0.0 x w or from 0.8 x w to 1.5 x w.

We have found, for example, that repeated tripping of a device as described in detail in Example 1 below, which is a device of the kind shown in Figure 4, causes the PTC element to become progressively eroded along a plane midway between the electrodes and at right angles to the direction of current flow, and that the device often continues to provide effective protection until it has been divided in half by the erosion. It is preferred that the electrodes should be such that if a device fails in this way, the electrodes should be spring-biased or the device otherwise arranged so that the two parts of the PTC element fall away from each other, so that the device fails in the open position.

Devices of this preferred class may have for example a resistance at 23°C of 1 to 100 ohms, preferably 10 to 30 ohms, and an $i_{crit}$ of 0.05 to 2 amps, preferably 0.08 to 0.5 amps.

In another class of devices, the electrodes are in the form of planar sheets with a flat PTC element between them. Such devices tend to be more prone to failure through arcing than devices of the preferred class, but can be of lower resistance, e.g. 0.05 to 1 ohm, preferably 0.08 to 0.3 ohm. In such devices, it is highly desirable that the minimum cross-sectional area of the PTC element should be less than the ESA of the electrodes and separated therefrom by at least 0.05 inch, and that the PTC element be composed of a composition containing an arc-controlling additive. A device of this type is illustrated in Figures 7A,B and 7C. Figure 7A,B shows the front and side views of the device (which are identical) and Figure 7C shows a plan view of the device. Planar metal mesh electrodes 1 and 2 contact either side of PTC element 3, which has channels 4 cut into each edge thereof. The shaded area of Figure 7C shows the area over which the computed current density is calculated.

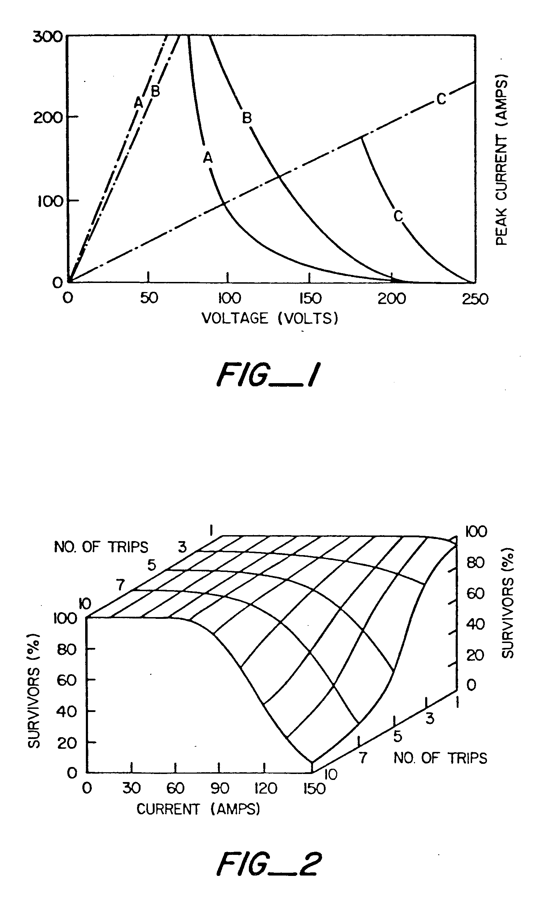

Referring now to Figure 1, this shows, for three devices A, B and C, on the broken lines the size of the peak current (or inrush current) for different voltages across each device, the slope of the line being set by the resistance of the device in accordance with Ohm's law. The solid lines are a measure of the ability of each device to provide repeated and effective protection at a particular voltage and current. If the voltage and current fall beneath the solid line, then the device will have the required performance; if they fall above the solid line, the device will not have the required performance. Device A is one of the previously proposed devices, Devices B and C are devices of the present invention, Device B being for example a laminar device of the type shown in Figure 7 and Device C being for example a device of the type shown in Figure 4.

The positions of the solid lines in Figure 1 are of course dependent on the particular standard of performance which is required for a device to be regarded as satisfactory, e.g. the ability to trip 5 times or 10 times. In addition it should be realized that in a number of devices manufactured in an identical way, there will often in fact be some differences between the devices and that the positions of the solid lines therefore also depend on a decision as to the percentage of devices which must have the particular standard of performance. A better understanding of the latter factor can be gained from Figure 2, which shows a typical result of testing a batch of identically manufactured devices at a particular voltage, but at different peak currents, a number of devices being tested at each current level, and seeing how many trips each of the devices will survive. Figure 2 is a three-dimensional plot of the current (x axis), the number of trips (y axis) and percentage of survivors (z axis).

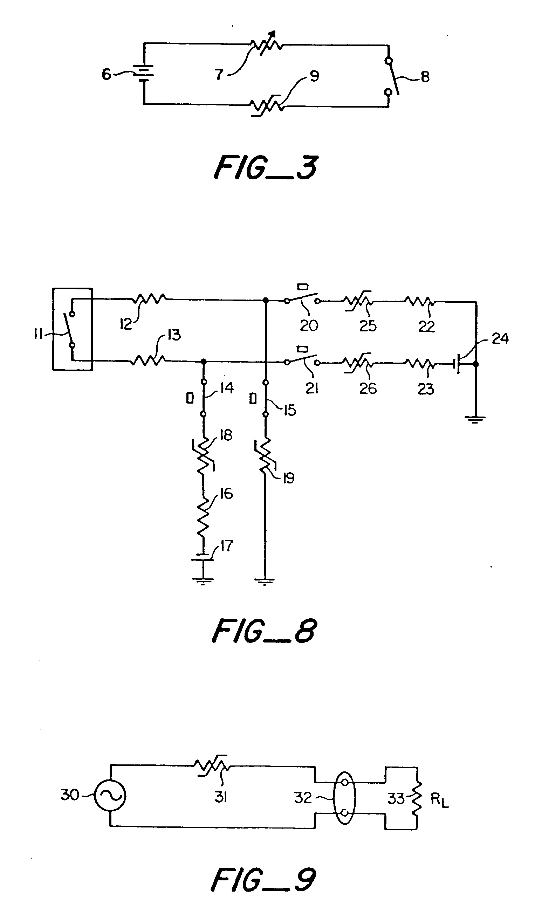

Figure 3 shows the test circuit which is used in obtaining results as shown in Figures 1 and 2, and in the test routines defined above. The test circuit comprises a DC voltage source 6, e.g. of 120 or 240 volts, a fixed resistor 7 whose resistance can be varied to produce the desired test conditions hut which is fixed for any particular test routine, a switch 8 and the device 9.

Figure 8 is an equivalent circuit for a telephone system (i.e. a circuit which omits components which, though needed for other purposes, do not play any significant part in the behavior of the circuit under a fault condition as discussed below). This is an example of an intrusion-prone circuit of the invention.

A telephone 10, shown generally by a box, includes a switch 11 shown in the open position, i.e. the telephone is not in use. The telephone is connected to an exchange by lines 12 and 13, whose resistance, depending on the distance of the telephone from the exchange, is for example 40 to 500 ohms. When the telephone is not in use, lines 12 and 13 are connected via relay contacts 14 and 15 to a resistor 16, which typically has a resistance of about 700 ohms, and a battery 17, which typically has a voltage of about 50 volts. PTC protective devices 18 and 19 are in series with relays 14 and 15 respectively. When the telephone is in use, relays 14 and 15 are open, and lines 14 and 15 are connected via relays 20 and 21 to the supervisory circuit of the telephone exchange, which includes two resistors 22 and 23 each typically having a resistance of about 200 ohms and a battery 24, which typically has a voltage of about 50 volts. PTC protective devices 25 and 26 are in series with relays 20 and 21 respectively. In this circuit, the fault condition which must be guarded against is the intrusion of an AC mains voltage, e.g. of 240 volts or more, for example as a result of a power line falling across one or both of lines 12 and 13 or the lines being connected to an AC power source. An AC mains voltage will generate currents which will damage the relays 14, 15, 20 and 21 or the resistors 16, 22 and 23, or wiring on circuit boards forming part of the circuit.

It will of course be realized that devices 18 and 19 could be omitted if protection of the supervisory circuit was all that was required, and that devices 25 and 26 could be omitted if protection of the line circuit was all that was required. Devices 18, 19, 25 and 26 could be replaced by a pair of protective devices placed in lines 12 and 13, so that a fault current would flow through them whether relays 14, 15 were closed and relays 20 and 21 were open, or vice versa.

Figure 9 is an example of a fixed voltage circuit of the invention. An AC power source 30, having a voltage of at least 120 volts, eg 220 volts, is connected through circuit protection device 31 to a socket 32, to which is connected an electrical appliance 33 having a resistance $R_L$. Device 31 protects the circuit from excessive currents which are generated for example by shorting of the leads to the appliance 33 or, when the appliance is disconnected, by shorting of the terminals in the socket.

The invention is illustrated by the following Examples.

### Example 1

The ingredients and amounts thereof given in the Table below were used in this Example.

TABLE

| | MASTERBATCH | | | FINAL MIX | | |
|---|---|---|---|---|---|---|
| | g | wt% | vol% | g | wt% | vol% |
| Carbon Black (Furnex N765) | 1444 | 46.9 | 32.2 | 1143.9 | 33.8 | 26.9 |
| Polyethylene (Marlex 6003) | 1572 | 51.1 | 65.4 | 1246.3 | 36.8 | 54.7 |
| Filler (Hydral 705) | - | - | - | 948 | 28.0 | 16.5 |
| Antioxidant | 62 | 2.0 | 2.3 | 48.8 | 1.4 | 1.9 |

NOTES:

Furnex N765 (available from City Services Co.) has a particle size (D) of 60 millimicrons, a density of 1.8 g/cc, and a surface area (s) of 32 $m^2$/g.

Marlex 6003 is a high density polyethylene with a melt index of 0.3 which is available from Phillips Petroleum Co.

The antioxidant used was an oligomer of 4,4-thio bis (3-methyl-6-t-butyl phenol) with an average degree of polymerization of 3-4, as described in U.S. Patent No. 3,986,981.

Hydral 705 is alumina trihydrate available from Aluminum Company of America.

The ingredients for the master batch were dry blended and then mixed for 8 minutes in a Banbury mixer turning at high gear. The mixture was dumped, cooled and granulated. The final mix was prepared by dry blending 948 g. of the Hydral 705 with 2439 g. of the master batch mixture, and then mixing the dry blend for 4-5 minutes in a Banbury mixer turning at high gear. The mixture was dumped, cooled, granulated and dried (at 70°C, 1 Torr for 16 hours).

The granulated final mix was melt extruded as a strip 1.27 cm wide and 0.27 cm thick, using a cross-head die, around a pair of pre-heated 20 AWG (diameter 0.095 cm) 19/32 stranded nickel-plated copper wires whose centers were 0.61 cm apart. The extruded product was cut into 1 inch lengths, and the polymeric composition removed from half of each length to produce a device as shown in Figure 4.

### EXAMPLE 2

The ingredients and amounts thereof given in the Table below were used in the Example.

TABLE

| | Masterbatch | | | Final Mix | | |
|---|---|---|---|---|---|---|
| | g | wt% | vol% | g | wt% | vol% |
| Carbon black (Statex G) | 1440 | 46.8 | 32.0 | 1141.5 | 33.7 | 26.7 |
| Polyethylene (Marlex 6003) | 1584 | 51.5 | 66.0 | 1256.2 | 37.1 | 55.2 |
| Filler (Hydral 705) | | | | 948.3 | 28.0 | 16.5 |
| Antioxidant | 52.5 | 1.7 | 2.0 | 41.5 | 1.2 | 1.6 |

Notes:

Statex G, available from Columbian Chemicals, has a density of 1.8 g/cc, a surface area (S) of 35 $m^2$/g, and an average particle size (D) of 60 $m^2$/g, and an average particle size (D) of 60 millimicrons.

After drying the polymer at 70°C and the carbon black at 150°C for 16 hours in a vacuum oven, the ingredients for the masterbatch were dry blended and then mixed for 12 minutes in a Banbury mixer turning at high gear. The mixture was dumped, cooled, and granulated. The final mix was prepared by dry blending 948.3 g. of Hydral 705 with 2439.2 g. of the masterbatch, and then mixing the dry blend for 7 minutes in a Banbury mixer turning at high gear. The mixture was dumped, cooled, granulated, and then dried at 70°C and 1 torr for 16 hours.

Using a cross-head die, the granulated final mix was melt extruded as a strip 1 cm. wide and 0.25 cm. thick, around three wires. Two of the wires were pre-heated 20 AWG (0.095 cm. diameter) 19/32 stranded nickel-plated copper wires whose centers were 0.76 cm. apart, and the third wire, a 24 AWG (0.064 cm. diameter) solid nickel-plated copper wire, was centered between the other two. Portions 1 cm. long were cut from the extruded product and from each portion the polymeric composition was removed from about half the length, and the whole of the center 24 AWG wire was removed, leaving a hole running through the polymeric element. The products were heat treated in nitrogen at 250°C for 340 minutes and then in air at 110°C for 60 minutes, and were then irradiated. Each product was then sealed inside a metal can, with a polypropylene envelope between the conductive element and the can.

**Claims**

1. A PTC conductive polymer device:
   (1) which is a circuit protection device:
   (2) which comprises:
   a PTC element composed of a PTC composition which
   (A) has a switching temperature $T_S$ and
   (B) comprises:
   (i) a crystalline polymer component
   (ii) dispersed in said polymer component,
   (a) an arc-controlling additive and
   (b) a particulate filler component which comprises a conductive filler which is one or more of carbon black and graphite and is present in a quantity such that the resistivity of the composition at 23°C is less than 10 ohm-cm; and
   at least two electrodes which can be connected to a source of electrical power and which, when so connected, cause current to flow through said PTC element;
   (3) which has a resistance at 23°C of $^{23}{}_oR_d$ and
   (4) which is characterized in that:
   when the device forms part of a first test circuit which is subjected to a device test routine, or when the device forms part of a second test circuit which is subject to a device test routine then in each of the test cycles of the test routine, the result of closing the switch is that
   (a) initially the device generates heat by $I^2R$ heating at a rate which exceeds the rate at which

11

heat can be lost from the device, causing the resistance of the device to rise rapidly and the circuit current to fall, and

(b) thereafter the device reaches a high temperature stable operating condition in which the rate at which the device generates heat by $I^2R$ heating is equal to the rate at which heat is lost from the device, and

after said test routine has been completed, the device has a resistance at 23°C which is less than 3 x $^{23}_oR_d$ ohms, preferably less than 2 x $^{23}_oR_d$ ohms;

the first test circuit being a circuit which consists essentially of the PTC conductive polymer protection device, surrounded by still air at 0°C, 23°C or 70°C, a switch, a fixed resistor of resistance of $R_1$ ohms and a 120 volt DC power source, where $R_1$ is such that the computed current density, defined as the largest of

(i) the current divided by the effective surface area (ESA) of a first electrode,

(ii) the current divided by the effective surface area of a second electrode, and

(iii) the current divided by the minimum cross-sectional area of the PTC element at right angles to the direction of current flow,

in the PTC element of the device in the first test cycle of the device test routine reaches a maximum of 155 amps/cm$^2$;

wherein the ESA of an electrode is the cross-sectional area of the electrode when viewed in the direction of current flow (ignoring any apertures in the electrode which are sufficiently small for the electrode to provide a substantially equipotential surface over its total area);

the second test circuit being a circuit which consists essentially of the PTC conductive polymer protection device, surrounded by still air at 0°C, 23°C, or 70°C, a switch, a fixed resistor of resistance $R_2$ ohms, and a 240 volt DC power source, where $R_2$ is such that the peak current through the device in the first test cycle of the device test routine is the higher of 1 amp and 3 x $i^{air}_{crit}$ where $i^{air}_{crit}$ is the maximum steady state current which, when it flows through the device, causes the device to generate heat by $I^2R$ heating at a rate equal to the rate at which heat can be lost from the device; and

a device test routine being a procedure in which a first or second test circuit is subjected to N successive test cycles, where N is 5, in each of which test cycles the switch is closed either for 5 seconds (for the first test circuit) or for 30 seconds (for the second test circuit), the switch is then opened, and the device is allowed to cool to 23°C before the next test cycle is carried out.

2. A device according to claim 1 wherein the electrodes are in the form of wires or thin strips and are completely embedded in the PTC element.

3. A device according to claim 1 wherein the electrodes are in the form of planar sheets.

4. A device according to claim 1, 2 or 3 wherein the device has a resistance at 23°C of less than 100 ohms.

5. A device according to any of the preceding claims wherein the PTC element is in direct physical and electrical contact with the electrodes.

6. A device according to any of the preceding claims characterised in that the device has the defined performance in both the first test circuit and the second test circuit when the device is in still air at 23°C.

7. A device according to claim 1, characterised in that (a) it contains two electrodes each having an electrically active surface of generally columnar shape, and (b) it has a resistance at 23°C of 1 to 100 ohms and an $i^{air}_{crit}$ of 0.05 to 2 amps.

8. A device according to claim 1 characterised in that (a) each of the electrodes has a length, 1, from 0.76 to 2.5 cm and a width, w, from 0.05 to 0.25 cm; (b) the interelectrode distance, t, is constant; and (c) w is less than 0.5 t.

9. A device according to claim 3, characterised in that (a) it contains two electrodes in the form of planar sheets and a conductive polymer PTC element sandwiched between the electrodes, the minimum cross-sectional area of the PTC element being less than the ESA of the electrodes, and (b) it has a resistance at 23°C of 0.05 to 1 ohm.

10. A device according to any of the preceding claims, characterized in that said PTC composition is cross-linked.

11. An electrical circuit:

(1) which comprises

a power source having a voltage of V volts,

a PTC conductive polymer protection device which comprises a PTC element composed of a PTC composition which comprises a crystalline polymer component and, dispersed in said polymer component, an arc-controlling additive, and a particulate filler component which comprises a conductive filler which is one or more of carbon black and graphite and is present in a quantity such that the resistivity of the composition at 23°C is less than 10 ohm cm, and

a damageable circuit component;

(2) which has a first normal operating condition in which

(A) a current $i_n$ flows through the device,

(B) the device is at a temperature $T_{dn}$ and has a resistance $R_{dn}$,

(C) the device is in contact with a medium which is at a temperature $T_n$,

(D) a current less than $i_{damage}$ flows through the damageable circuit component, and

(E) there is a stable equilibrium between the rate at which the device generates heat by $I^2R$ heating and the rate at which heat is lost from the device; and

(3) which is characterized in that:

if a first fault circuit containing the device is created and is subjected to a circuit test routine and/or if a second fault circuit containing the device is created and is subjected to a circuit test routine

then in each of the test cycles of the test routine the result of closing the switch is that

(a) initially the device generates heat by $I^2R$ heating at a rate which exceeds the rate at which heat can be lost from the device, thus causing the resistance of the device to rise rapidly and the circuit current to fall, and

(b) thereafter the current through the damageable circuit component reaches a stable value which is less than $i_{damage}$, the potential drop over the device reaches a stable value which is the higher of 120 volts and 1.5 xV, and the device reaches a high temperature stable operating condition in which the rate at which the device generates heat by $I^2R$ heating is equal to the rate at which heat is lost from the device; and

after said test cycles have been completed the device has a resistance at $T_{dn}$ which is less than 3 x $R_{dn}$, preferably less than 2 x $R_{dn}$;

the first fault circuit being a circuit which is created by introducing new electrical elements comprising a new power source and a switch into said electrical circuit and in which in the first test cycle of the circuit test routine

(a) there is an initial fault current flowing through the damageable circuit component which exceeds $i_{damage}$;

(b) there is an initial fault current flowing through the device which results in a computed current density,

defined as the largest of

(i) the current divided by the effective surface area (ESA) of the first electrode,

(ii) the current divided by the effective surface area of a second electrode, and

(iii) the current divided by the minimum cross-sectional area of the PTC element at right angles to the direction of current flow,

in the PTC element of the device which reaches a maximum of 155 amps/cm$^2$,

wherein the ESA of an electrode is the cross-sectional area of the electrode when viewed in the direction of current flow (ignoring any apertures in the electrode which are sufficiently small for the electrode to provide a substantially equipotential surface over its total area);

(c) the device and the damageable circuit component are in series; and

(d) the voltage is such that the peak potential drop over the device is the higher of 120 volts and 1.5 xV;

a circuit test routine being a procedure in which a first or second fault circuit is subjected to N successive cycles, where N is 5, in each of which test cycles the switch is closed either for 5 seconds (for the first fault circuit) or for 30 seconds (for the second fault circuit), the switch is then opened and the device allowed to cool to $T_{dn}$ before the next test cycle is carried out; and

the second fault circuit being a circuit which is created by introducing new electrical elements comprising a new power source and a switch into said electrical circuit and in which, in the first test cycle of the circuit test routine

(a) there is an initial fault current flowing through the damageable circuit component which exceeds $i_{damage}$,

(b) there is an initial fault current flowing through the device which is the higher of 1 amp and 3 x $i_{crit}$ where $i_{crit}$ is the maximum current which, when it flows through the device in the circuit, causes the device to generate heat by $I^2R$ heating at a rate equal to the rate at which heat can be lost from the device,

(c) the device and the damageable circuit component are in series, and

(d) the voltage is such that the peak potential drop over the device is 240 volts;

wherein a damageable circuit component is a component which is damaged if the current flowing through it exceeds a value $i_{damage}$ amps for a time t seconds where t is 30.

**12.** A circuit according to claim 11 characterised in that the voltage V is at most 73 volts, the circuit preferably being a line circuit of a telephone system.

**13.** An electrical circuit:

(1) which comprises

a PTC conductive polymer protection device,

which comprises a PTC element composed of a PTC composition which comprises a crystalline polymer component and, dispersed in said polymer component an arc-controlling additive, and a particulate filler component which comprises a conductive filler which is one or more of carbon black and graphite and is present in a quantity such that the resistivity of the composition at 23°C is less than 10 ohm cm, and

a power source having a voltage of $V_1$ volts which is at least 120 volts, and

other circuit elements which are connected in series with the device and which have an impedance of $R_L$ ohm;

(2) which has a second normal operating condition in which

(A) a current in flows through the device

(B) the device is at a temperature $T_{dn}$ and has a resistance $R_{dn}$ which is less than 0.5 x $R_L$ ohm (preferably less than 0.1 x $R_L$ ohm, especially less than 0.04 x $R_L$ ohm) and less than $V_1$ ohms (preferably 0.03 x $V_1$ to 0.3 x $V_1$ ohm, especially 0.05 x $V_1$ to 0.2 x $V_1$ ohm),

(C) the device is in contact with a medium which is at a temperature $T_n$, and

(D) there is a stable equilibrium between the rate at which the device generates heat by $I^2R$ heating and the rate at which heat is lost from the device;

(3) which has a positive response to current tripping; and

(4) which is characterized in that:

if the device, after having been removed from the circuit, is incorporated into a modified first test circuit which is then subjected to a modified device test routine and/or if it is incorporated into a modified second test circuit which is then subjected to a modified device test routine

then the device, after the modified device test routine has been carried out,

(i) has a resistance at $T_n$ which is less than 3 x $R_{dn}$, less than 0.5 x $R_L$, and less than $V_1$ ohms, and

(ii) has an electrical power/temperature relationship such that, if the device is replaced in the electrical circuit, the electrical circuit has a second normal operating condition and has a positive response to current tripping;

the modified first test circuit being a circuit which consists essentially of the protection device from the fixed voltage circuit, a switch, a fixed resistor of resistance $R_1$ ohms and a power source having the same voltage $V_1$ as the power source in the fixed voltage circuit, the device being in contact with the same medium at the same temperature $T_n$ as in the fixed voltage circuit and $R_1$ being such that the computed current density,

defined as the largest of

(i) the current divided by the effective surface area (ESA) of a first electrode,

(ii) the current divided by the effective surface area of a second electrode, and

(iii) the current divided by the minimum cross-sectional area of the PTC element at right angles to the direction of current flow,

in the PTC element of the device in the first test cycle of the modified test routine reaches a maximum of 155 amps/cm$^2$;

the ESA of an electrode is the cross-sectional area of the electrode when viewed in the direction of current flow (ignoring any apertures in the electrode which are sufficiently small for the electrode to provide a substantially equipotential surface over its total area);

a modified device test routine being a procedure in which a modified first test circuit or a modified second test circuit is subjected to N successive cycles where N is 5, in each of which test cycles the switch is closed either for 5 seconds (for the first modified test circuit) or for 30 seconds (for the second modified test circuit), whereby the device initially generates heat by $I^2R$ heating at a rate which exceeds the rate at which heat can be lost from the device, thus causing the resistance of the device to rise rapidly and the circuit current to fall, and thereafter the device reaches a high temperature stable operating condition in which the rate at which the device generates heat is equal to the rate at which heat is lost from the device, the switch is opened and the device is allowed to cool to $T_n$ before the next test cycle is carried out;

a modified second test circuit being a circuit which consists essentially of a protection device from a fixed voltage circuit in which the power source has a voltage $V_2$ which is at least 240 volts, a switch, a fixed resistor of resistance $R_2$ ohms and a power source having the same voltage $V_2$ as the power source in the fixed voltage circuit, the device being in contact with the same medium at the same temperature $T_n$ in the fixed voltage circuit and $R_2$ being such that in the first test cycle of the modified device test routine, the peak current through the device is the higher of 1 amp and 3 x $i_{crit}$ where $i_{crit}$ is the maximum current which, when it flows through the device in the circuit, causes the device to generate heat by $I^2R$ heating at a rate equal to the rate at which heat can be lost from the device;

a positive response to current tripping being defined as that which a fixed voltage circuit has

(a) if elements of the circuit are changed so that current flowing through said device increases slowly while maintaining ambient temperature substantially constant, then the temperature of the device increases slowly until the circuit reaches a critical operating condition in which (i) the equilibrium between the rate at which the device generates heat by $I^2R$ heating and the rate at which heat is lost from the device is unstable, (ii) the device is at a temperature $T_{d\ trip}$, and has a resistance $R_{d\ trip}$, (iii) the rate at which the resistance of the device changes with temperature

$$\frac{dR_{d\ trip}}{dT_{d\ trip}}$$

is positive, and (iv) the current has a value $i_{crit}$; and

(b) if elements of the circuit are further changed so that the current flowing through the device increases to 2 x $i_{crit}$, while maintaining ambient temperature substantially constant, then the rate at which the device generates heat by $I^2R$ heating exceeds the rate at which heat can be lost from the device and thus causes the temperature and the resistance of the device to rise rapidly and the circuit current to fall, and thereafter the circuit reaches a high temperature stable operating condition in which (i) the rate at which the device generates heat by $I^2R$ heating is equal to the rate at which heat is lost from the device; and (ii) the device is at a temperature $T_d$ latch which is such that the ratio of the power in the circuit in the normal operating condition to the power in the circuit in the high temperature stable operating condition, the switching ratio, is at least 8.

14. A circuit according to claim 11, 12 or 13 characterized in that the device is a device as claimed in any one of claims 1 to 10.

**Patentansprüche**

1. PTC leitfähige Polymervorrichtung:
    (1) bei der es sich um eine Schaltungsschutzvorrichtung handelt:
    (2) die folgendes aufweist:
    ein PTC Element, aufgebaut aus einer PTC Zusammensetzung, welche
        (A) eine Schalttemperatur $T_S$ hat und
        (B) aufweist:

(i) eine kristalline Polymerkomponente,

(ii) in dieser Polymerkomponente dispergiert

a) einen Lichtbogenlöschzusatz und

b) eine teilchenförmige Füllstoffkomponente, die einen leitfähigen Füllstoff aufweist, bei dem es sich um einen oder mehrere von Ruß und Graphit handelt und der in solcher Menge vorhanden ist, daß der spezifische Widerstand der Zusammensetzung bei 23 °C weniger als 10 Ohm-cm ist; und

mindestens zwei Elektroden, die an eine Quelle für elektrischen Strom angeschlossen werden können und, wenn sie angeschlossen sind, veranlassen, daß Strom durch das PTC Element fließt;

(3) die einen Widerstandswert bei 23 °C von $23_0R_d$ hat und

(4) die dadurch gekennzeichnet ist, daß:

wenn die Vorrichtung Teil eines ersten Testkreises ist, der einer Vorrichtungstestroutine unterworfen wird, oder wenn die Vorrichtung Teil eines zweiten Testkreises ist, der einer Vorrichtungstestroutine unterworfen wird, dann bei jedem der Testzyklen der Testroutine das Ergebnis des Schalterschließens darin besteht, daß

(a) anfangs die Vorrichtung Wärme erzeugt durch $I^2R$-Erwärmung mit einer Geschwindigkeit, die die Geschwindigkeit übersteigt, bei der Wärme von der Vorrichtung verloren werden kann, was verursacht, daß der Widerstandswert der Vorrichtung rasch ansteigt und der Schaltkreisstrom absinkt, und

(b) danach die Vorrichtung einen stationären Betriebszustand bei hoher Temperatur erreicht, bei dem die Geschwindigkeit, mit der die Vorrichtung Wärme erzeugt durch $I^2R$-Erwärmung, gleich der Geschwindigkeit ist, mit der Wärme von der Vorrichtung verlorengeht, und

nach Beendigung der Testroutine die Vorrichtung einen Widerstandswert bei 23° C hat, der kleiner ist als $3 \times 23_0R_d$ Ohm, vorzugsweise weniger als $2 \times 23_0R_d$ Ohm;

wobei der erste Testkreis ein Schaltkreis ist, der im wesentlichen aus der PTC leitfähigen Polymerschutzvorrichtung, umgeben von ruhiger Luft bei 0 °C, 23 °C oder 70 °C, einem Schalter, einem Festwiderstand mit einem Widerstandswert von $R_1$ Ohm und einer 120 Volt Gleichstromquelle besteht, wobei $R_1$ so ist, daß die errechnete Stromdichte, definiert als der größte Wert von

(i) dem Strom, dividiert durch den wirksamen Oberflächenbereich einer ersten Elektrode,

(ii) dem Strom, dividiert durch den wirksamen Oberflächenbereich einer zweiten Elektrode, und

(iii) dem Strom, dividiert durch die Minimumquerschnittsfläche des PTC Elements rechtwinklig zur Richtung des Stromflusses,

in dem PTC Element der Vorrichtung in dem ersten Testzyklus der Vorrichtungstestroutine ein Maximum von 155 A/cm$^2$ erreicht;

wobei der wirksame Oberflächenbereich einer Elektrode die Querschnittsfläche der Elektrode bei Betrachtung in Richtung des Stromflusses ist (wobei jegliche Öffnungen in der Elektrode außer acht gelassen werden, die so klein sind, daß die Elektrode über ihre Gesamtfläche im wesentlichen eine Äquipotential-Oberfläche bildet);

wobei der zweite Testkreis ein Schaltkreis ist, der im wesentlichen aus der PTC leitfähigen Polymerschutzvorrichtung, umgeben von ruhiger Luft bei 0 °C, 23 °C oder 70 °C, einem Schalter, einem Festwiderstand mit einem Widerstandswert von $R_2$ Ohm und einer 240 Volt Gleichstromquelle besteht, wobei $R_2$ so ist, daß der Spitzenstrom durch die Vorrichtung im ersten Testzyklus der Vorrichtungstestroutine der größere Strom von 1 A und $3 \times i^{air}_{crit}$ ist, wobei $i^{air}_{crit}$ der maximale Strom im eingeschwungenen Zustand ist, der, wenn er durch die Vorrichtung fließt, verursacht, daß die Vorrichtung Wärme durch $I^2R$-Erwärmung in einer Geschwindigkeit erzeugt, die gleich der Geschwindigkeit ist, mit der Wärme von der Vorrichtung verloren werden kann; und

wobei eine Vorrichtungstestroutine ein Verfahren ist, bei dem ein erster oder zweiter Testkreis N aufeinanderfolgenden Testzyklen unterworfen wird, worin N gleich 5 ist, und bei jedem dieser Testzyklen der Schalter entweder für 5 Sekunden (für den ersten Testkreis) oder 30 Sekunden (für den zweiten Testkreis) geschlossen wird, der Schalter dann geöffnet wird, und man die Vorrichtung auf 23 °C abkühlen läßt, ehe der nächste Testzyklus durchgeführt wird.

2. Vorrichtung nach Anspruch 1, bei der die Elektroden die Form von Drähten oder dünnen Streifen haben und vollständig in dem PTC Element eingebettet sind.

3. Vorrichtung nach Anspruch 1, bei der die Elektroden die Form von ebenen Flächenkörpern haben.

4. Vorrichtung nach Anspruch 1, 2 oder 3, bei der die Vorrichtung einen Widerstandswert bei 23 °C von weniger als 100 Ohm hat.

5. Vorrichtung nach einem der vorhergehenden Ansprüche, bei der das PTC Element mit den Elektroden in direktem physischem und elektrischem Kontakt steht.

6. Vorrichtung nach einem der vorhergehenden Ansprüche, dadurch gekennzeichnet, daß die Vorrichtung das definierte Leistungsvermögen sowohl im ersten Testkreis als auch im zweiten Testkreis hat, wenn sich die Vorrichtung in ruhiger Luft bei 23 °C befindet.

7. Vorrichtung nach Anspruch 1, dadurch gekennzeichnet, daß sie (a) zwei Elektroden enthält, die jeweils eine elektrisch aktive Oberfläche von im allgemeinen säulenartiger Gestalt haben, und sie (b) einen Widerstandswert bei 23 °C von 1 bis 100 Ohm und ein $i^{air}_{crit}$ von 0,05 bis 2 A hat.

8. Vorrichtung nach Anspruch 1, dadurch gekennzeichnet, daß (a) jede der Elektroden eine Länge 1 von 0,76 bis 2,5 cm und eine Breite w von 0,05 bis 0,25 cm hat; (b) der Abstand zwischen den Elektroden, t, konstant ist; und (c) w weniger als 0,5 t beträgt.

9. Vorrichtung nach Anspruch 3, dadurch gekennzeichnet, daß sie (a) zwei Elektroden in Form von ebenen Flachkörpern und ein sandwichartig zwischen den Elektroden angeordnetes, leitfähiges, polymeres PTC Element enthält, wobei die Minimumquerschnittsfläche des PTC Elements kleiner ist als der wirksame Oberflächenbereich der Elektroden und sie (b) einen Widerstandswert bei 23 °C von 0,05 bis 1 Ohm hat.

10. Vorrichtung nach einem der vorhergehenden Ansprüche, dadurch gekennzeichnet, daß die PTC Zusammensetzung vernetzt ist.

11. Elektrische Schaltung,

(1) die folgendes aufweist: eine Spannungsquelle mit einer Spannung von V Volt, eine PTC leitfähige Polymerschutzvorrichtung, die ein PTC Element aufweist, welches aus einer PTC Zusammensetzung aufgebaut ist, die eine kristalline Polymerkomponente und in der Polymerkomponente dispergiert einen Lichtbogenlöschzusatz sowie eine teilchenförmige Füllstoffkomponente aufweist, die einen leitfähigen Füllstoff aufweist, bei dem es sich um einen oder mehrere von Ruß und Graphit handelt und der in solcher Menge vorhanden ist, daß der spezifische Widerstand der Zusammensetzung bei 23 °C weniger als 10 Ohm cm ist, und ein beschädigbares Schaltungsbauteil;

(2) die einen ersten normalen Betriebszustand hat, bei dem

(A) ein Strom $i_n$ durch die Vorrichtung fließt,

(B) die Vorrichtung sich auf einer Temperatur $T_{dn}$ befindet und einen Widerstandswert $R_{dn}$ hat,

(C) die Vorrichtung mit einem Medium in Kontakt steht, welches eine Temperatur $T_n$ hat,

(D) ein Strom von weniger als $i_{damage}$ durch das beschädigbare Schaltungsbauteil fließt, und

(E) ein stabiles Gleichgewicht besteht zwischen der Geschwindigkeit, mit der die Vorrichtung Wärme durch $I^2R$-Erwärmung erzeugt, und der Geschwindigkeit, mit der Wärme von der Vorrichtung verlorengeht; und

(3) die dadurch gekennzeichnet ist, daß:

wenn ein erster Fehlerkreis, der die Vorrichtung enthält, geschaffen und einer Schaltkreistestroutine unterworfen wird, und/oder wenn ein zweiter Fehlerkreis, der die Vorrichtung enthält, geschaffen und einer Schaltkreistestroutine unterworfen wird,

dann ist bei jedem der Testzyklen der Testroutine das Ergebnis des Schalterschließens, daß

(a) anfangs die Vorrichtung Wärme durch $I^2R$-Erwärmung mit einer Geschwindigkeit erzeugt, die die Geschwindigkeit übersteigt, mit der Wärme von der Vorrichtung verloren werden kann, wodurch verursacht wird, daß der Widerstandswert der Vorrichtung rasch ansteigt und der Schaltkreisstrom absinkt, und

(b) danach der Strom durch das beschädigbare Schaltungsbauteil einen stabilen Wert erreicht, der geringer ist als $i_{damage}$, wobei der Potentialabfall über der Vorrichtung einen stabilen Wert erreicht, der der höhere Wert ist von 120 Volt und 1,5 xV, und die Vorrichtung einen stationären Betriebszustand bei hoher Temperatur erreicht, bei dem die Geschwindigkeit, mit dem die Vorrichtung Wärme durch $I^2R$-Erwärmung erzeugt, gleich der Geschwindigkeit ist, mit der Wärme von der Vorrichtung verloren wird; und

nach Beendigung der Testzyklen die Vorrichtung einen Widerstandswert bei $T_{dn}$ hat, der geringer ist als 3 x $R_{dn}$, vorzugsweise geringer als 2 x $R_{dn}$;

wobei der erste Fehlerkreis ein Schaltkreis ist, der geschaffen wird durch Einführen neuer elektrischer Elemente, die eine neue Stromquelle und einen Schalter aufweisen, in die Schaltung, und bei dem im ersten Testzyklus der Schaltkreistestroutine

(a) ein anfänglicher Fehlerstrom durch das beschädigbare Schaltbauteil fließt, der $i_{damage}$ übersteigt;

(b) ein anfänglicher Fehlerstrom durch die Vorrichtung fließt, der zu einer berechneten Stromdichte führt;

definiert als der größte Wert von

(i) dem Strom, dividiert durch den wirksamen Oberflächenbereich einer ersten Elektrode,

(ii) dem Strom, dividiert durch den wirksamen Oberflächenbereich einer zweiten Elektrode, und

(iii) dem Strom, dividiert durch die Minimumquerschnittsfläche des PTC Elements rechtwinklig zur Richtung des Stromflusses,

in dem PTC Element der Vorrichtung, wobei die Stromdichte ein Maximum von 155 A/cm$^2$ erreicht, wobei der wirksame Oberflächenbereich einer Elektrode die Querschnittsfläche der Elektrode bei Betrachtung in Richtung des Stromflusses ist (wobei jegliche Öffnungen in der Elektrode außer acht gelassen werden, die so klein sind, daß die Elektrode über ihre Gesamtfläche im wesentlichen eine Äquipotential-Oberfläche bildet);

(c) die Vorrichtung und das beschädigbare Schaltungsbauteil in Reihe geschaltet sind; und

(d) die Spannung so ist, daß der Spitzenpotentialabfall über der Vorrichtung der höhere Wert von 120 Volt und 1,5 xV ist.

wobei eine Schaltkreistestroutine ein Verfahren ist, bei dem ein erster oder zweiter Fehlerkreis aufeinanderfolgenden Zyklen N unterworfen wird, wobei N gleich 5 ist, in jedem der Testzyklen der Schalter entweder 5 Sekunden (für den ersten Fehlerkreis) oder 30 Sekunden (für den zweiten Fehlerkreis) geschlossen wird, der Schalter dann geöffnet wird, und man die Vorrichtung auf $T_{dn}$ abkühlen läßt, ehe der nächste Testzyklus durchgeführt wird; und

wobei der zweite Fehlerkreis ein Schaltkreis ist, der geschaffen wird durch Einführen neuer elektrischer Elemente, die eine neue Stromquelle und einen Schalter aufweisen, in den Stromkreis, und bei dem im ersten Testzyklus der Schaltkreistestroutine

(a) ein anfänglicher Fehlerstrom durch das beschädigbare Schaltungsbauteil fließt, der $i_{damage}$ übersteigt,

(b) ein anfänglicher Fehlerstrom durch die Vorrichtung fließt, der den höheren Wert von 1 A und 3 x $i_{crit}$ hat, wobei $i_{crit}$ der maximale Strom ist, der, wenn er durch die Vorrichtung im Schaltkreis fließt, veranlaßt, daß die Vorrichtung Wärme durch I$^2$R-Erwärmung mit einer Geschwindigkeit erzeugt, die gleich der Geschwindigkeit ist, mit der Wärme von der Vorrichtung verloren werden kann;

(c) die Vorrichtung und das beschädigbare Schaltungsbauteil in Reihe geschaltet sind, und

(d) die Spannung so ist, daß der Spitzenpotentialabfall über der Vorrichtung 240 Volt beträgt;

wobei ein beschädigbares Schaltungsbauteil ein Bauteil ist, welches beschädigt wird, wenn der durch es hindurchfließende Strom einen Wert $i_{damage}$ A während einer Zeit von t Sekunden übersteigt, wobei t gleich 30 ist.

**12.** Schaltung nach Anspruch 11, dadurch gekennzeichnet, daß die Spannung V höchstens 75 Volt beträgt, wobei die Schaltung vorzugsweise ein Leitungskreis eines Telefonsystems ist.

**13.** Elektrische Schaltung,

(1) die folgendes aufweist:

eine PTC leitfähige Polymerschutzvorrichtung,

die ein PTC Element aufweist, welches aus einer PTC Zusammensetzung aufgebaut ist, die eine kristalline Polymerkomponente und in der Polymerkomponente dispergiert einen Lichtbogenlöschzusatz sowie eine teilchenförmige Füllstoffkomponente aufweist, die einen leitfähigen Füllstoff aufweist, bei dem es sich um einen oder mehrere von Ruß und Graphit handelt und der in solcher Menge vorhanden ist, daß der spezifische Widerstand der Zusammensetzung bei 23 °C weniger als 10 Ohm cm ist, und

eine Spannungsquelle, die eine Spannung von $V_1$ Volt hat, die mindestens 120 Volt beträgt, und

weitere Schaltungselemente, die mit der Vorrichtung in Reihe geschaltet sind und eine Impedanz von $R_L$ Ohm haben;

(2) die einen zweiten normalen Betriebszustand hat, bei dem

(A) ein Strom $i_n$ durch die Vorrichtung fließt,

(B) die Vorrichtung sich auf einer Temperatur $T_{dn}$ befindet und einen Widerstandswert $R_{dn}$ hat, der kleiner ist als $0,5 \times R_L$ Ohm (vorzugsweise kleiner als $0,1 \times R_L$ Ohm, insbesondere kleiner als $0,04 \times R_L$ Ohm) und kleiner als $V_1$ Ohm (vorzugsweise $0,03 \times V_1$ bis $0,3 \times V_1$ Ohm, insbesondere $0,05 \times V_1$ bis $0,2 \times V_1$ Ohm),

(C) die Vorrichtung mit einem Medium in Kontakt steht, welches sich auf einer Temperatur $T_n$ befindet, und

(D) ein stabiles Gleichgewicht zwischen der Geschwindigkeit besteht, mit der die Vorrichtung Wärme durch $I^2R$-Erwärmung erzeugt, und der Geschwindigkeit, mit der Wärme von der Vorrichtung verloren geht;

(3) die ein positives Ansprechen auf Stromauslösen hat; und

(4) die dadurch gekennzeichnet ist, daß:

wenn die Vorrichtung, nachdem sie aus der Schaltung entfernt wurde, in einen modifizierten ersten Testkreis eingebaut wird, der dann einer modifizierten Vorrichtungstestroutine unterworfen wird, und/oder wenn sie in einen modifizierten zweiten Testkreis eingebaut wird, der dann einer modifizierten Vorrichtungstestroutine unterworfen wird,

die Vorrichtung dann nach dem Durchführen der modifizierten Vorrichtungstestroutine

(i) einen Widerstandswert bei $T_n$ hat, der kleiner ist als $3 \times R_{dn}$, kleiner als $0,5 \times R_L$ und kleiner als $V_1$ Ohm, und

(ii) ein solches Verhältnis von elektrischem Strom/Temperatur hat, daß die Schaltung, wenn die Vorrichtung wieder in die Schaltung eingesetzt wird, einen zweiten normalen Betriebszustand und ein positives Ansprechen auf Stromauslösen hat;

wobei der abgewandelte erste Testkreis ein Schaltkreis ist, der im wesentlichen aus der Schutzvorrichtung vom Schaltkreis mit fester Spannung, einem Schalter, einem Festwiderstand mit einem Widerstandswert von $R_1$ Ohm und einer Spannungsquelle besteht, die die gleiche Spannung $V_1$ hat wie die Spannungsquelle im Schaltkreis mit fester Spannung, wobei die Vorrichtung mit dem gleichen Medium bei der gleichen Temperatur $T_n$ in Kontakt steht wie in dem Schaltkreis mit fester Spannung, und $R_1$ so ist, daß die berechnete Stromdichte,

definiert als der größte Wert von

(i) dem Strom, dividiert durch den wirksamen Oberflächenbereich einer ersten Elektrode,

(ii) dem Strom, dividiert durch den wirksamen Oberflächenbereich einer zweiten Elektrode, und

(iii) dem Strom, dividiert durch die Minimumquerschnittsfläche des PTC Elements rechtwinklig zur Richtung des Stromflusses,

in dem PTC Element der Vorrichtung im ersten Testzyklus der modifizierten Testroutine ein Maximum von 155 A/cm$^2$ erreicht;

wobei der wirksame Oberflächenbereich einer Elektrode die Querschnittsfläche der Elektrode bei Betrachtung in Richtung des Stromflusses ist (wobei jegliche Öffnungen in der Elektrode außer acht gelassen werden, die so klein sind, daß die Elektrode über ihre Gesamtfläche im wesentlichen eine Äquipotentialoberfläche bildet);

wobei eine modifizierte Vorrichtungstestroutine ein Verfahren ist, bei dem ein modifizierter erster Meßkreis oder ein modifizierter zweiter Meßkreis aufeinanderfolgenden Zyklen N unterworfen wird, wobei N gleich 5 ist, bei jedem Testzyklus der Schalter entweder 5 Sekunden (für den ersten modifizierten Meßkreis) oder 30 Sekunden (für den zweiten modifizierten Meßkreis) geschlossen wird, wodurch die Vorrichtung anfangs Wärme durch $I^2R$-Erwärmung mit einer Geschwindigkeit erzeugt, die die Geschwindigkeit übersteigt, mit der Wärme von der Vorrichtung verloren werden kann, wodurch verursacht wird, daß der Widerstandswert der Vorrichtung rasch ansteigt und der Schaltkreisstrom absinkt, und danach die Vorrichtung einen stationären Betriebszustand bei hoher Temperatur erreicht, bei dem die Geschwindigkeit, mit der die Vorrichtung Wärme erzeugt, gleich der Geschwindigkeit ist, mit der Wärme von der Vorrichtung verloren geht, der Schalter geöffnet wird, und man die Vorrichtung auf $T_n$ abkühlen läßt, ehe der nächste Testzyklus durchgeführt wird;

wobei ein modifizierter zweiter Meßkreis ein Schaltkreis ist, der im wesentlichen aus einer Schutzvorrichtung aus einem Schaltkreis mit fester Spannung, in dem die Spannungsquelle eine Spannung $V_2$ hat, die mindestens 240 Volt beträgt, einem Schalter, einem Festwiderstand mit einem Widerstandswert $R_2$ Ohm und einer Spannungsquelle besteht, die die gleiche Spannung $V_2$ hat wie die Spannungsquelle im Schaltkreis mit fester Spannung, wobei die Vorrichtung mit dem gleichen Medium bei der gleichen Temperatur $T_n$ im Schaltkreis mit fester Spannung in Kontakt steht und $R_2$ so ist, daß im ersten Testzyklus der modifizierten Vorrichtungstestroutine der Spitzenstrom durch die Vorrichtung der höhere von 1 A und 3 x $i_{crit}$ ist, wobei $i_{crit}$ der maximale Strom ist, der, wenn er durch die Vorrichtung im Schaltkreis fließt, verursacht, daß die Vorrichtung Wärme durch $I^2R$-Erwärmung mit einer Geschwindigkeit erzeugt, die gleich der Geschwindigkeit ist, mit der Wärme von der Vorrichtung verloren gehen kann;

wobei ein positives Ansprechen auf Stromauslösen definiert ist als dasjenige, welches ein Festspannungskreis hat,

(a) wenn Elemente des Schaltkreises so geändert werden, daß durch die Vorrichtung fließender Strom langsam zunimmt, während die Umgebungstemperatur im wesentlichen konstantgehalten wird, dann die Temperatur der Vorrichtung langsam zunimmt, bis der Schaltkreis einen kritischen Betriebszustand erreicht, bei dem (i) das Gleichgewicht zwischen der Geschwindigkeit, mit der die Vorrichtung Wärme durch $I^2R$-Erwärmung erzeugt, und der Geschwindigkeit, mit der Wärme von der Vorrichtung verloren geht, unstabil ist, (ii) die Vorrichtung sich auf einer Temperatur $T_d$ trip befindet und einen Widerstandswert $R_d$ trip hat, (iii) die Geschwindigkeit, mit der der Widerstandswert der Vorrichtung sich mit der Temperatur ändert

$$\frac{dR_d \ trip}{dT_d \ trip}$$

positiv ist, und (iv) der Strom einen Wert $i_{crit}$ hat; und

(b) wenn Elemente des Schaltkreises ferner so geändert werden, daß der durch die Vorrichtung fließende Strom auf 2 x $i_{crit}$ ansteigt, während die Umgebungstemperatur im wesentlichen konstantgehalten wird, dann die Geschwindigkeit, mit der die Vorrichtung Wärme durch $I^2R$-Erwärmung erzeugt, die Geschwindigkeit übersteigt, mit der Wärme von der Vorrichtung verloren werden kann, und dadurch verursacht wird, daß die Temperatur und der Widerstandswert der Vorrichtung rasch ansteigen und der Schaltkreisstrom absinkt, und danach der Schaltkreis einen stationären Betriebszustand bei hoher Temperatur erreicht, bei dem (i) die Geschwindigkeit, mit der die Vorrichtung Wärme durch $I^2R$-Erwärmung erzeugt, gleich der Geschwindigkeit ist, mit der Wärme von der Vorrichtung verloren geht; und (ii) die Vorrichtung sich auf einer Temperatur $T_d$ latch befindet, die so ist, daß das Verhältnis der Energie im Schaltkreis bei normalem Betriebszustand zur Energie im Schaltkreis bei dem stationären Betriebszustand bei hoher Temperatur, das Umschaltverhältnis, mindestens 8 ist.

**14.** Schaltung nach Anspruch 11, 12 oder 13, dadurch gekennzeichnet, daß die Vorrichtung eine Vorrichtung gemäß irgendeinem der Ansprüche 1 bis 10 ist.

**Revendications**

**1.** Dispositif à polymère conducteur CPT :

(1) qui est un dispositif de protection de circuit :

(2) qui comporte :

un élément CPT composé d'une composition CPT qui

(A) présente une température de commutation $T_S$ et

(B) comprend :

(i) un composant polymère cristallin

(ii) en dispersion dans ledit composant polymère,

(a) un additif de contrôle d'arcs et

(b) un composant de charge en particules qui comprend une charge conductrice qui est un ou plusieurs des éléments constitués du noir de carbone et du graphite et qui est présente en quantité telle que la résistivité de la composition à 23°C est inférieure à 10 ohms.cm ; et

au moins deux électrodes qui peuvent être connectées à une source d'énergie électrique et qui, lorsqu'elles sont ainsi connectées, font circuler un courant à travers ledit élément CPT ;

(3) qui a une résistance à 23°C de $23_o R_d$ et

(4) qui est caractérisé en ce que :

lorsque le dispositif fait partie d'un premier circuit d'essai qui est soumis à un programme d'essai de dispositif, ou lorsque le dispositif fait partie d'un second circuit d'essai qui est soumis à un programme d'essai de dispositif, alors, dans chacun des cycles d'essai du programme d'essai, le résultat de la fermeture du commutateur est tel que

(a) initialement, le dispositif génère de la chaleur par échauffement par effet Joule à un débit qui dépasse le débit auquel le dispositif peut céder de la chaleur, amenant la résistance du dispositif à s'élever rapidement et le courant du circuit à chuter, et

(b) ensuite, le dispositif atteint une condition de fonctionnement stable à température élevée dans laquelle le débit auquel le dispositif génère de la chaleur par échauffement par effet Joule est égal au débit auquel le dispositif cède de la chaleur, et

après que ledit programme d'essai a été achevé, le dispositif a une résistance à 23°C qui est inférieure à $3 \times {}^{23}_oR_d$ ohms, de préférence inférieure à $2 \times {}^{23}_oR_d$ ohms ;

le premier circuit d'essai étant un circuit qui est constitué essentiellement du dispositif de protection à polymère conducteur CPT, entouré par de l'air immobile à 0°C, 23°C ou 70°C, d'un commutateur, d'une résistance fixe de valeur de $R_1$ ohms et d'une source d'énergie à courant continu, 120 volts, où $R_1$ est telle que la densité de courant calculée, définie comme étant le plus grand

(i) du courant divisé par l'aire de surface efficace (ASE) d'une première électrode,

(ii) du courant divisé par l'aire de surface efficace d'une seconde électrode, et

(iii) du courant divisé par l'aire minimale en section transversale de l'élément CPT perpendiculairement à la direction du flux de courant,

dans l'élément CPT du dispositif dans le premier cycle d'essai du programme d'essai de dispositif, atteint un maximum de 155 ampères/cm$^2$ ;

dans lequel la valeur ASE d'une électrode est l'aire en section transversale de l'électrode telle que vue dans la direction du flux de courant (en ignorant toutes ouvertures dans l'électrode qui sont suffisamment petites pour que l'électrode présente une surface sensiblement équipotentielle sur toute son aire) ;

le second circuit d'essai étant un circuit qui est constitué essentiellement du dispositif de protection à polymère conducteur CPT, entouré d'air immobile à 0°C, 23°C ou 70°C, d'un commutateur, d'une résistance fixe de valeur $R_2$ ohms et d'une source d'énergie à courant continu, 240 volts, où $R_2$ est telle que la valeur de crête à travers le dispositif dans le premier cycle d'essai du programme d'essai de dispositifs est la plus haute de 1 ampère et $3 \times i^{air}_{crit}$ où $i^{air}_{crit}$ est le courant maximal en régime stabilisé qui, lorsqu'il circule à travers le dispositif, amène le dispositif à générer de la chaleur par échauffement par effet Joule à un débit égal au débit auquel le dispositif peut céder de la chaleur ; et

un programme d'essai de dispositifs étant un processus dans lequel un premier ou second circuit d'essai est soumis à N cycles d'essais successifs, où N est égal à 5, cycles d'essai dans chacun desquels le commutateur est fermé soit pendant 5 secondes (pour le premier circuit d'essai), soit pendant 30 secondes (pour le second circuit d'essai), le commutateur étant ensuite ouvert, et le dispositif étant autorisé à refroidir à 23°C avant que le cycle d'essai suivant soit effectué.

**2.** Dispositif selon la revendication 1, dans lequel les électrodes se présentent sous la forme de fils ou de bandes minces et sont complètement encastrées dans l'élément CPT.

**3.** Dispositif selon la revendication 1, dans lequel les électrodes se présentent sous la forme de feuilles planes.

**4.** Dispositif selon la revendication 1, 2 ou 3, dans lequel le dispositif possède une résistance à 23°C de moins de 100 ohms.

**5.** Dispositif selon l'une quelconque des revendications précédentes, dans lequel l'élément CPT est en contact électrique et physique direct avec les électrodes.

**6.** Dispositif selon l'une quelconque des revendications précédentes, caractérisé en ce que le dispositif possède le comportement défini à la fois dans le premier circuit d'essai et dans le second circuit d'essai lorsque le dispositif est dans de l'air immobile à 23°C.

**7.** Dispositif selon la revendication 1, caractérisé en ce que (a) il contient deux électrodes ayant chacune une surface électriquement active de forme globalement en colonne, et (b) il a une résistance à 23°C de 1 à 100 ohms et une valeur $i^{air}_{crit}$ de 0,05 à 2 ampères.

**8.** Dispositif selon la revendication 1, caractérisé en ce que (a) chacune des électrodes a une longueur, 1, de 0,76 à 2,5 cm et une largeur, w, de 0,05 à 0,25 cm ; (b) la distance interélectrode, t, est constante ; et (c) w est inférieur à 0,5 t.

**9.** Dispositif selon la revendication 3, caractérisé en ce que (a) il contient deux électrodes sous la forme de feuilles planes et un élément CPT en polymère conducteur pris en sandwich entre les électrodes, l'aire minimale en section transversale de l'élément CPT étant inférieure à la valeur ASE des électrodes, et (b) il a une résistance à 23°C de 0,05 à 1 ohm.

**10.** Dispositif selon l'une quelconque des revendications précédentes, caractérisé en ce que ladite composition CPT est réticulée.

**11.** Circuit électrique :
   (1) qui comporte
   une source d'énergie ayant une tension de V volts,
   un dispositif de protection à polymère conducteur CPT qui comprend un élément CPT composé d'une composition CPT qui comprend un constituant polymère cristallin et, en dispersion dans ledit constituant polymère, un additif de contrôle d'arc, et un constituant de charge en particules qui comprend une charge conductrice qui est un ou plusieurs des éléments constitués du noir de carbone et du graphite et qui est présent en quantité telle que la résistivité de la composition à 23°C est inférieure à 10 ohms.cm, et
   un composant de circuit endommageable ;
   (2) qui possède une première condition de fonctionnement normale dans laquelle
      (A) un courant $i_n$ circule à travers le dispositif,
      (B) le dispositif est à une température $T_{dn}$ et a une résistance $R_{dn}$,
      (C) le dispositif est en contact avec un milieu qui est à une température $T_n$,
      (D) un courant inférieur à $i_{dommage}$ circule à travers le composant de circuit endommageable, et
      (E) il est existe un équilibre stable entre le débit auquel le dispositif génère de la chaleur par échauffement par effet Joule et le débit auquel le dispositif cède de la chaleur ; et
   (3) qui est caractérisé en ce que :
   si un premier circuit en dérangement contenant le dispositif est créé et est soumis à un programme d'essai de circuit et/ou si un second circuit en dérangement contenant le dispositif est créé et est soumis à un programme d'essai de circuit,
   alors, dans chacun des cycles d'essai du programme d'essai, le résultat de la fermeture du commutateur est que
      (a) initialement, le dispositif génère de la chaleur par échauffement par effet Joule à un débit qui dépasse le débit auquel le dispositif peut céder de la chaleur, amenant la résistance du dispositif à s'élever rapidement et le courant du circuit à chuter, et
      (b) ensuite, le courant traversant le composant de circuit endommageable atteint une valeur stable qui est inférieure à $i_{dommage}$, la chute de potentiel sur le dispositif atteint une valeur stable qui est la plus élevée de 120 volts et de 1,5 xV, et le dispositif atteint une condition de fonctionnement stable à température élevée dans laquelle le débit auquel le dispositif génère de la chaleur par échauffement par effet Joule est égal au débit auquel le dispositif cède de la chaleur ; et
   après que lesdits cycles d'essai ont été achevés, le dispositif possède une résistance à $T_{dn}$ qui est inférieure à 3 x $R_{dn}$, de préférence inférieure à 2 x $R_{dn}$ ;
   le premier circuit en dérangement étant un circuit qui est créé par l'introduction de nouveaux éléments électriques comprenant une nouvelle source d'énergie et un commutateur dans ledit circuit électrique et dans lequel, dans le premier cycle d'essai du programme d'essai de circuit,
      (a) il y a un courant initial de dérangement circulant à travers le composant de circuit endommageable, qui dépasse $i_{dommage}$ ;
      (b) il y a un courant initial de dérangement circulant à travers le dispositif, qui aboutit à une densité de courant calculée,
      définie comme étant le plus grand
         (i) du courant divisé par l'aire de surface efficace (ASE) de la première électrode,
         (ii) du courant divisé par l'aire de surface efficace d'une seconde électrode, et
         (iii) du courant divisé par l'aire minimale en section transversale de l'élément CPT perpendiculairement à la direction du flux de courant,

dans l'élément CPT du dispositif, qui atteint un maximum de 155 ampères/cm$^2$,

dans lequel la valeur ASE d'une électrode est l'aire en section transversale de l'électrode telle que vue dans la direction du flux de courant (en ignorant toutes ouvertures dans l'électrode qui sont suffisamment petites pour que l'électrode présente une surface sensiblement équipotentielle sur son aire totale) ;

(c) le dispositif et le composant de circuit endommageable sont en série ; et

(d) la tension étant telle que la chute de potentiel de crête sur le dispositif est la plus haute de 120 volts et de 1,5 xV ;

un programme d'essai de circuit étant un processus dans lequel un premier ou un second circuit en dérangement est soumis à N cycles successifs, où N est égal à 5, cycles d'essai dans chacun desquels le commutateur est fermé, soit pendant s secondes (pour le premier circuit en dérangement), soit pendant 30 secondes (pour le second circuit en dérangement), le commutateur étant ensuite ouvert et le dispositif étant autorisé à refroidir jusqu'à $T_{dn}$ avant que le cycle d'essai suivant soit exécuté ; et

le second circuit en dérangement étant un circuit qui est crée par l'introduction de nouveaux éléments électriques comprenant une nouvelle source d'énergie et un commutateur dans ledit circuit électrique et dans lequel, dans le premier cycle d'essai du programme d'essai du circuit,

(a) il y a un courant initial de dérangement circulant à travers le composant de circuit endommageable, qui dépasse $i_{dommage}$,

(b) il y a un courant initial de dérangement circulant à travers le dispositif qui est le plus élevé de 1 ampère et de 3 x $i_{crit}$ où $i_{crit}$ est le courant maximal qui, lorsqu'il circule à travers le dispositif dans le circuit, amène le dispositif à générer de la chaleur par échauffement par effet Joule à un débit égal au débit auquel le dispositif peut céder de la chaleur,

(c) le dispositif et le composant de circuit endommageable sont en série, et

(d) la tension est telle que la chute de potentiel de crête sur le dispositif est de 240 volts ;

dans lequel un composant de circuit endommageable est un composant qui est endommagé si le courant circulant à travers lui dépasse une valeur $i_{dommage}$ ampères pendant un temps t secondes où t est égal à 30.

**12.** Circuit selon la revendication 11, caracterisé en ce que la tension V est au plus de 75 volts, le circuit étant avantageusement un circuit de ligne d'un système téléphonique.

**13.** Circuit électrique :

(1) qui comprend

un dispositif de protection à polymère conducteur CPT,

qui comprend un élément CPT composé d'une composition CPT qui comprend un constituant polymère cristallin et, en dispersion dans ledit constituant polymère, un additif de contrôle d'arc, et un constituant de charge en particules qui comprend une charge conductrice qui est un ou plusieurs des éléments formés du noir de carbone et du graphite et qui est présent en une quantité telle que la résistivité de la composition à 23°C est inférieure à 10 ohms.cm, et

une source d'énergie ayant une tension de $V_1$ volts qui est d'au moins 120 volts, et

d'autres éléments de circuit qui sont connectés en série avec le dispositif et qui ont une impédance de $R_L$ ohms ;

(2) qui a une seconde condition de fonctionnement normale dans laquelle

(A) un courant $i_n$ circule à travers le dispositif,

(B) le dispositif est à une température $T_{dn}$ et a une résistance $R_{dn}$ qui est inférieure à 0,5 x $R_L$ ohms (avantageusement inférieure à 0,1 x $R_L$ ohms, en particulier inférieure à 0,04 x $R_L$ ohms) et inférieure à $V_1$ ohms (avantageusement de 0,03 x $V_1$ à 0,3 x $V_1$ ohms, en particulier de 0,05 x $V_1$ à 0,2 x $V_1$ ohms),

(C) le dispositif est en contact avec un milieu qui a une température $T_n$, et

(D) il y a un équilibre stable entre le débit auquel le dispositif génère de la chaleur par échauffement par effet Joule et le débit auquel le dispositif cède de la chaleur ;

(3) qui a une réponse positive à un déclenchement de courant ; et

(4) qui est caractérisé en ce que :

si le dispositif, après avoir été retiré du circuit, est incorporé dans un premier circuit d'essai modifié qui est ensuite soumis à un programme d'essai de dispositif modifié et/ou s'il est incorporé dans un second circuit d'essai modifié qui est ensuite soumis à un programme d'essai de dispositif modifié, alors le dispositif, après que le programme d'essai de dispositif modifié a été exécuté,

EP 0 038 715 B1

(i) a une résistance à $T_n$ qui est inférieure à 3 x $R_{dn}$, inférieure à 0,5 X $R_L$ et inférieure à $V_1$ ohms, et

(ii) a une relation puissance électrique/température telle que, si le dispositif est remis en place dans le circuit électrique, le circuit électrique possède une seconde condition de fonctionnement normale et possède une réponse positive à un déclenchement de courant ;

le premier circuit d'essai modifié étant un circuit qui est constitué essentiellement du dispositif de protection provenant du circuit à tension fixe, d'un commutateur, d'une résistance fixe de valeur $R_1$ ohms et d'une source d'énergie ayant la même tension $V_1$ que la source d'énergie dans le circuit à tension fixe, le dispositif étant en contact avec le même milieu à la même température $T_n$ que dans le circuit à tension fixe et $R_1$ étant telle que la densité de courant calculée,

définie comme étant le plus

(i) du courant divisé par l'aire de surface efficace (ASE) d'une première électrode,

(ii) du courant divisé par l'aire de surface efficace d'une seconde électrode, et

(iii) du courant divisé par l'aire minimale en section transversale de l'élément CPT perpendiculairement à la direction du flux de courant,

dans l'élément CPT du dispositif dans le premier cycle d'essai du programme d'essai modifié, atteint un maximum de 155 ampères/cm$^2$ ;

la valeur ASE d'une électrode est l'aire en section transversale de l'électrode telle que vue dans la direction du flux de courant (en ignorant toutes ouvertures dans l'électrode qui sont suffisamment petites pour que l'électrode présente une surface sensiblement équipotentielle sur son aire totale) ;

un programme d'essai de dispositif modifié étant un processus dans lequel un premier circuit d'essai modifié ou un second circuit d'essai modifié est soumis à N cycles successifs, où N est égal à 5, cycles d'essai dans chacun desquels le commutateur est fermé, soit pendant 5 secondes (pour le premier circuit d'essai modifié), soit pendant 30 secondes (pour le second circuit d'essai modifié), de manière que le dispositif génère initialement de la chaleur par échauffement par effet Joule à un débit qui dépasse le débit auquel le dispositif peut céder de la chaleur, amenant ainsi la résistance du dispositif à s'élever rapidement et le courant du circuit à chuter, et ensuite le dispositif atteint une condition de fonctionnement stable à température élevée dans laquelle le débit auquel le dispositif génère de la chaleur est égal au débit auquel le dispositif cède de la chaleur, le commutateur est ouvert et le dispositif est autorisé à refroidir jusqu'à $T_n$ avant que le cycle d'essai suivant soit exécuté ;

un second circuit d'essai modifié étant un circuit qui est constitué essentiellement d'un dispositif de protection provenant d'un circuit à tension fixe dans lequel la source d'énergie a une tension $V_2$ qui est d'au moins 240 volts, d'un commutateur, d'une résistance fixe de valeur $R_2$ ohms et d'une source d'énergie ayant la même tension $V_2$ que la source d'énergie dans le circuit à tension fixe, le dispositif étant en contact avec le même milieu à la même température $T_n$ dans le circuit à tension fixe et $R_2$ étant telle que, dans le premier cycle d'essai du programme d'essai de dispositif modifié, le courant de crête à travers le dispositif est le plus élevé de 1 ampère et de 3 x $i_{crit}$ où $i_{crit}$ est le courant maximal qui, lorsqu'il circule à travers le dispositif dans le circuit, amène le dispositif à générer de la chaleur par échauffement par effet Joule à un débit égal au débit auquel le dispositif peut céder de la chaleur ;

une réponse positive à un déclenchement de courant étant définie comme celle que possède un circuit à tension fixe

(a) si les éléments du circuit sont modifiés de façon qu'un courant circulant à travers ledit dispositif croisse lentement tout en maintenant la température ambiante sensiblement constante, puis la température du dispositif s'élève lentement jusqu'à ce que le circuit atteigne une condition de fonctionnement critique dans laquelle (i) l'équilibre entre le débit auquel le dispositif génère de la chaleur par échauffement par effet Joule et le dispositif auquel le dispositif cède de la chaleur est instable, (ii) le dispositif est à une température $T_{d\ déclenchement}$ et a une résistance $R_{d\ déclenchement}$, (iii) la vitesse à laquelle la résistance du dispositif varie avec la température

$$\frac{dR_{d\ déclenchement}}{dT_{d\ déclenchement}}$$

est positive, et (iv) le courant a une valeur $i_{crit}$ ; et

(b) si des éléments du circuit sont encore modifiés de façon que le courant circulant à travers le dispositif croisse jusqu'à 2 x $i_{crit}$, tout en maintenant la température ambiante sensiblement constante, le débit auquel le dispositif génère de la chaleur par échauffement par effet Joule dépasse alors le débit auquel le dispositif peut céder de la chaleur et amène donc la température et la résistance du dispositif à s'élever rapidement et le courant du circuit à chuter, et ensuite le circuit atteint une condition de fonctionnement stable à température élevée dans laquelle (i) le débit auquel le dispositif génère de la chaleur par échauffement par effet Joule est égal au débit auquel le dispositif cède de la chaleur ; et (ii) le dispositif est à une température $t_{d\ blocage}$ qui est telle que le rapport de la puissance dans le circuit dans la condition de fonctionnement normale à la puissance dans le circuit dans la condition de fonctionnement stable à température élevée, le rapport de commutation, est d'au moins 8.

14. Circuit selon la revendication 11, 12 ou 13, caractérisé en ce que le dispositif est un dispositif selon l'une quelconque des revendications 1 à 10.

FIG__1

FIG__2

FIG_3

FIG_8

FIG_9

FIG_4A    FIG_4B    FIG_4C

FIG_5A    FIG_5B    FIG_5C

FIG_6A    FIG_6B    FIG_6C

FIG_7A,B    FIG_7C